# EUROPÄISCHE PATENTSCHRIFT

(11) **EP 2 976 278 B1**
(45) Veröffentlichungstag und Bekanntmachung des Hinweises auf die Patenterteilung: **20.02.2019**
(21) Anmeldenummer: 14728410.3
(22) Anmeldetag: 21.03.2014
(51) Int. Cl.: B65G 57/08, B65G 57/16

(54) **STAPELSTATION FÜR EINE THERMOFORMANLAGE, VERFAHREN ZUM HERSTELLEN VON BECHERFÖRMIGEN PRODUKTEN SOWIE THERMOFORMANLAGE**
STACKING STATION FOR A THERMOFORMING PLANT, METHOD FOR PRODUCING CUP-SHAPED PRODUCTS AND THERMOFORMING PLANT
POSTE D'EMPILAGE POUR UNE INSTALLATION DE THERMOFORMAGE, PROCÉDÉ DE FABRICATION DE PRODUITS EN FORME DE COUPE AINSI QU'INSTALLATION DE THERMOFORMAGE

(30) Priorität: 22.03.2013 DE 102013004920
(43) Veröffentlichungstag der Anmeldung: 27.01.2016
(60) Teilanmeldung: 15002254.9
(73) Patentinhaber: KIEFEL GmbH, 83395 Freilassing (DE)
(72) Erfinder: WIESER, Gerhard, 83451 Piding (DE); KNOLL, Peter, 83404 Ainring (DE)
(74) Vertreter: Farago-Schauer, Peter Andreas
(86) Internationale Anmeldenummer: PCT/DE2014/000146
(87) Internationale Veröffentlichungsnummer: WO 2014/146639

(56) Entgegenhaltungen:
- EP-A2- 0 995 582
- EP-A2- 2 407 846
- DE-A1- 2 541 531
- DE-A1- 4 244 089
- DE-C1- 4 436 531
- GB-A- 2 061 237

## Beschreibung

Die Erfindung betrifft eine Stapelstation für eine Thermoformanlage nach dem Oberbegriff des Anspruchs 1, ein Verfahren zum Herstellen von becherförmigen Produkten in einer Thermoformanlage nach dem Oberbegriff des Anspruchs 4 sowie eine Thermoformanlage mit einer Stapelstation nach dem Oberbegriff des Anspruchs 7.

Thermoformanlagen sind im Stand der Technik zahlreich bekannt. Sie werden eingesetzt zum thermoplastischen Verformen von Kunststoffen. Die Kunststoffe werden im Allgemeinen als Endlosfolienbahn oder als einzelne Kunststofflagen in die Anlage hineingegeben. Innerhalb der Thermoformanlage durchläuft der Kunststoff mehrere Stationen. Üblicherweise sind dies eine Heizstation, eine Formstation, oft eine Vereinzelungsstation, und je nach Anwendungsfall eine Stapelstation. Eine Stapelstation hat die Aufgabe, becherförmige Produkte durch Ineinandersetzen zu stapeln, sodass sich Stangenware ergibt. Die "Becherform" ist dabei weitläufig zu verstehen. Prinzipiell kommt es darauf an, dass sich ein Produkt in ein mit ihm hergestelltes anderes, identisches Produkt einfügen lässt, so dass sich eine Vielzahl solcher identischer Produkte zu einer Stange stapeln lassen. Die Becher können dabei offen oder geschlossen sein, und sie können im Grundriss rund oder anders geformt sein, wie beispielsweise rechteckig. Unter den hier wegen der einfachen Bezeichenbarkeit als "becherförmig" bezeichneten Produkten fallen somit prinzipiell alle denkbaren konkaven Gegenstände, wie Schalen, Teller, Becher oder desgleichen aus Kunststoff oder gegebenenfalls auch aus Papier oder weitere ähnliche Produkte. Insbesondere sei an Kunststoffschalen zur Verpackung von Fleisch, Obst und anderen Lebensmitteln gedacht.

Die DE 42 44 089 A1 offenbart eine Thermoformanlage mit einer Stapelstation. In einem Formwerkzeug in einer Formstation werden einzelne schalenförmige Gegenstände erzeugt. Diese sind allerdings noch nicht vollständig vereinzelt. Vielmehr geht die Druckschrift - wie die meisten Anlagen im Stand der Technik - davon aus, dass es von Vorteil ist, die Produkte noch mit kleinen Stegen verbunden zu lassen. Sie lassen sich dann erheblich leichter weitertransportieren. Erst in einer dem Formwerkzeug nachgelagerten Vereinzelungsstation ist ein Ausdrücker vorgesehen, der immer eine ganze Reihe der geformten Produkte aus dem miteinander verbundenen System herausdrückt. Die Platte von in einem Produktionsgang hergestellten Gegenständen, die an mindestens zwei Längskanten noch mit dem jeweils benachbarten Gegenstand durch Stege verbunden sind, werden als "Index" oder im Plural als "Indizes" bezeichnet, wobei diese Bezeichnung auch in der vorliegenden Anmeldung aufgegriffen wird. Innerhalb des Index' sind die Gegenstände in einem Raster angeordnet, also in Zeilen und Spalten, wobei als die Spalten die Anordnung längs zur Maschinenrichtung zu verstehen sein soll, und somit die Zeilen des Index' quer zur Maschinenrichtung zu verstehen sind.

Die DE 42 44 089 A1 drückt mit dem Ausdrücker immer eine Zeile der konkaven Gegenstände aus dem Index heraus. Diese liegen dann auf einem Kippstapler. Der Kippstapler ist schwenkbar an der Transporteinrichtung angeordnet, welche die Produkte in Form des Index' aus dem Formwerkzeug heraustransportiert. Der Kippstapler führt eine Kippbewegung durch, so dass die Gegenstände in eine neue Orientierung kommen. In der neuen Orientierung ist ein Stapelschieber vorgesehen, der die Produkte in der auf dem Kippstapler vorliegenden Stapelform auf ein als Querförderer bezeichnetes Transportband schiebt. Der Querförderer läuft quer zur Maschinenrichtung und übergibt die Stapel an ein Längsförderband.

Die EP 0 395 960 A1 zeigt einen Längsförderer, der in mehrere nebeneinanderliegende sowie in Transportrichtung ausgerichtete Schächte unterteilt ist.

Bei einem gattungsfremden Verfahren gemäß der DE-OS 30 25 951 ist ein Breitspurförderer vorgesehen, wobei nach dem Verdrängungsprinzip der Vereinzelungsabschnitt gegenüber dem Breitspurförderer wesentlich verbreitert und aus mehreren nebeneinander verlaufenden Förderbändern gebildet ist. Diese Offenbarung nimmt jedoch keine Stapelung vor, sondern eine Hintereinanderreihung von Gegenständen.

Die DE 44 36 531 C1 offenbart eine Thermoformanlage nach dem Oberbegriff des Anspruchs 1 und ein Verfahren zum Herstellen von becherförmigen Produkten in einer Thermoformanlage nach dem Oberbegriff des Anspruchs 4.

Der hier vorliegenden Erfindung liegt die Aufgabe zugrunde, dem Stand der Technik eine Verbesserung oder eine Alternative zur Verfügung zu stellen. Dies wird mittels einer Stapelstation für eine Thermoformanlage nach Anspruch 1 und einem Verfahren zum Herstellen von becherförmigen Produkten in einer Thermoformanlage nach Anspruch 4 gelöst.

Begrifflich sei hierzu folgendes erläutert:
Die "Stapelstation" übernimmt bevorzugt nur die Funktion des Stapelns der bereits vereinzelten Produkte, kann aber auch die Vereinzelung und gegebenenfalls auch einen weiteren Arbeitsschritt oder weitere Arbeitsschritte mit übernehmen

Generell sei darauf hingewiesen, dass im Rahmen der hier vorliegenden Patentanmeldung unbestimmte Artikel wie "ein", "zwei" usw. als "mindestens"-Angaben zu verstehen sind, also als "mindestens ein...", "mindestens zwei..." usw., sofern sich nicht aus dem jeweiligen Kontext etwa ergibt, dass dort nur "genau ein...", "genau zwei..." usw. gemeint sein soll.

Die "Stapelrichtung" sei als die Längserstreckungsrichtung des hergestellten Stapels verstanden, in einem einfachen Fall von beispielweise kreisrunden rotationssymmetrischen Produkten also die Rotationsachse.

Die "Ausrichtung abweichend von der Stapelrichtung" wird im Normalfall eine vertikale Richtung sein. Die Erfindung ist jedoch nicht auf eine vertikale Ausrichtung der einzelnen Produktlängsachsen, somit der potenziellen Stapelrichtung der Produkte, eingeschränkt.

Ein "Fallschacht" zeichnet sich dadurch aus, dass er für die becherförmigen Produkte eine Fallstrecke zur Verfügung stellt. Diese kann auch sehr kurz sein. Der Eingang in die Fallstrecke muss mittelbar oder unmittelbar eine "Kippkante" aufweisen. Als eine Kippkante sei eine solche Kante zu verstehen, welche innerhalb der Stapelsatzstation die Funktion übernimmt, die Produkte zu kippen. Bevorzugt kann das Kippen durch Einfluss von Schwerkraft erfolgen. Die Kante kann massiv oder mit einer durchgehenden Stange oder mit von einer oder mehreren Seiten vorstehenden Bolzen ausgeführt sein. Auch beispielsweise eine Luftdruckunterstützung oder eine andere Fluidunterstützung wie beispielsweise eine Wasserdruckunterstützung ist denkbar, um die Bewegung des Kippens an der Kippkante und der anschließenden Bewegung in den Fallschacht hinein zu unterstützen.

Die Stapelstation nach Anspruch 1 bewirkt das Kippen der Produkte mit der Kippkante und dem Fallschacht. Die kosten- und wartungsaufwendige Kippstaplereinrichtung aus der DE 42 44 089 A1 kann somit vollständig entfallen. Bei idealer Ausgestaltung ist es sogar denkbar, dass sowohl die Kippkante als auch der Fallschacht jeweils keinerlei angetriebene Teile aufweisen.

Bevorzugt ist für jede Spalte der Produkte ein Fallschacht vorgesehen, insbesondere genau ein Fallschacht. Die Produkte bewegen sich in Maschinenrichtung vorwärts und liegen in einem Raster vor. Somit bewegt sich jede Spalte parallel zu ihrer benachbarten Spalte auf die Kippeinrichtung zu. Da die Kippkante das Kippen der Produkte bewirkt, aber der Fallschacht das Stabilisieren der Produkte unterstützt oder bewirkt, damit sich diese später leichter stapeln lassen, wird eine besonders große Präzision der Bewegung der einzelnen Produkte dann erreicht, wenn für jede Spalte aus dem Index genau ein Fallschacht vorgesehen ist, so dass konstruktiv in der Anlage für jede Spalte an Kavitäten im Formwerkzeug eben jener genau ein Fallschacht vorgesehen ist.

Eine bevorzugte Ausführungsform der Erfindung sieht vor, dass im Falle eines Fallschachts der eine Fallschacht beziehungsweise im Falle mehrerer Fallschächte die Fallschächte entweder einzeln oder gemeinsam als auswechselbares Modul vorgesehen ist beziehungsweise sind.

Je nach Ausgestaltung kann es für die Zuverlässigkeit des Kippens der Produkte von Bedeutung sein, dass die Geometrie des Fallschachts exakt auf die Geometrie des Formwerkzeugs und damit auf die Geometrie der hergestellten Produkte abgestimmt ist. Denn im Idealfall soll der Kippschacht eine Lageänderung des aus dem Index ausgestoßenen Produkts ohne weitere Antriebe ermöglichen können, also mit Hilfe der Schwerkraft eine Bewegung der Produkte ermöglichen. Ein Ideal auf ein Produkt abgestellter Fallschacht kann daher beispielsweise Führungskanten, Führungsleisten oder desgleichen für das sich durch ihn bewegende Produkt bereitstellen, und/oder der Fallschacht kann Bremseinrichtungen für das Produkt bereitstellen, und/oder der Fallschacht kann eine Umlenkung für das sich bewegende Produkt bereitstellen, oder desgleichen. Bei der Produktion einer Thermoformanlage ist es daher erstrebenswert, passend zu einem Formwerkzeug, welches im Allgemeinen auch aus einem Modul für sämtliche herzustellenden Produkte eines Index' besteht, in gleicher Weise den Fallschacht als ein dazu passendes Modul einsetzen zu können. Auch im Falle eines Auswechselns der herzustellenden Produkte beim Betreiber der Thermoformanlage ist es von Vorteil, wenn die Fallschächte als ein Modul pro Fallschacht oder als ein Modul für alle Fallschächte gewechselt werden kann. Idealerweise besteht ein Fallschachtmodul aus mehreren Fallschächten, welche miteinander verbunden, so dass im Falle eines Beschädigens eines der Fallschächte nicht das gesamte mehrschachtige Modul ausgewechselt werden muss, sondern lediglich der beschädigte einzelne Fallschacht ausgewechselt werden kann.

Es wurde bereits vorstehend kurz angedeutet, dass es von Vorteil sein kann, wenn der Fallschacht dazu eingerichtet ist, die Produkte von der Schwerkraft beschleunigt den Fallschacht entlang fallen zu lassen.

Die Produkte benötigen auf dem Wege von der Vereinzelung zur fertigen Stapelung üblicherweise zwei verschiedene Bewegungen: Einerseits müssen sie eine Kippbewegung ausführen, damit die in der Regel mit vertikaler Achse aus dem Formwerkzeug und aus der Vereinzelung kommenden Produkte nicht vertikal gestapelt werden müssen, sondern bevorzugt eher liegend als stehend. Andererseits wird in den meisten Fällen eine Lageänderung vorgesehen sein, bei welcher sich die Produkte ausgehend von der geodätischen Höhe des Index' nach unten verlagern. Die Erfindung hat erkannt, dass es mit unnötigem Aufwand und somit für unnötige Kosten auf Seiten des Käufers einer Thermoformanlage verbunden ist, für die Lageänderung einen elektromechanischen Antrieb vorzusehen. Stattdessen scheint es der Erfindung sinnvoller zu sein, die Schwerkraft zum Beschleunigen des Produkts nach unten zu nutzen. Die Produkte können dann mit ihrer eigenen Gewichtskraft die oft gewünschte Lageveränderung nach unten bewirken.

Der Vollständigkeit halber sei darauf hingewiesen, dass auch in einer Konstellation, in welcher der Schwerkraft des fallenden Produkts eine Bremskraft entgegengesetzt ist, so dass mitunter keine Geschwindigkeitssteigerung des Produkts auf dem Weg nach unten durch den Fallschacht beobachtbar ist, ebenfalls unter die hier vorgestellte Formulierung fallen kann. In der bevorzugten Ausführungsform jedoch erhöht das Produkt seine Geschwindigkeit auf dem Weg durch den Fallschacht zumindest über eine Teilstrecke des Fallschachts.

Wenn eine Fallbremse vorgesehen ist, können die fallenden Produkte seitlich und/oder an der Oberseite und/oder an der Unterseite, bevorzugt aber an mindestens zwei gegenüberliegenden Seiten, mittels Reibung gebremst werden. Dies kann zum einen für eine Lautstärkereduzierung während der Produktion sorgen, andererseits werden die Kanten der Produkte, auf welchen die Produkte unten aufschlagen, stärker geschont.

Eine geeignete Fallbremse kann beispielsweise eine Bürste sein.

Mit Blick auf das Anlagendesign wird vorgeschlagen, dass an den Fallschacht eine Stapelstrecke angeschlossen ist.

Die DE 42 44 089 A1 stapelt die Produkte direkt unterhalb des Ausdrückers, somit in vertikaler Richtung. Die weitere Handhabung der Produkte erfolgt dann ohne weiteres Stapeln. Vielmehr legt der Kippstapler den bereits erzeugten Stapel lediglich in einer geodätischen Höhe nach unten und gleichzeitig auf die Seite, und von dort erfolgt ein Weitertransport, aber kein weiteres Stapeln.

Bei der Stapelstation nach Anspruch 1 erfolgt demgegenüber ein Stapeln bevorzugt auch nach dem Durchlauf der Produkte durch die Kippkante und den Fallschacht. Der zugrunde liegende Gedanke für diesen Aspekt liegt darin, dass zunächst entweder vollständig ungestapelte, einzelne Produkte oder aber vorgestapelte Produkte gekippt und durch den Fallschacht in ihrer Höhe nach unten verlegt werden. Unter "vorgestapelten" Produkten sei zu verstehen, dass zwar ein kleiner Stapel an Produkten hergestellt wird, dass dieser aber eine geringere Anzahl an gestapelten Produkten aufweist als letztlich im fertigen Stapel die Thermoformanlage verlassen, oder jedenfalls die Stapelstation in ihrem ersten Schritt verlassen. So sei insbesondere daran gedacht, nur ein, zwei oder drei Produkte in einem Vorstapel zu versehen, den Vorstapel dann zu kippen und durch den Fallschacht fallen zu lassen, woraufhin das Stapeln der kleineren Vorstapel zu einem größeren Stapel noch direkt dort in derselben Anlage passiert, aber mit liegenden Vorstapeln, also mit gekippten Vorstapeln. Dazu können die Vorstapel in ihrer gekippten Position einfach liegend ineinandergeschoben werden. Bevorzugt befindet sich die Stapelstrecke unterhalb der Fallschächte beginnend, so dass die Anlage sehr kurz bauen kann und bei idealer Ausgestaltung zusätzlich zu einem Stapelschieber, der die Stapelung der liegenden Produkte bewirkt, kein weiterer Antrieb in der liegenden Richtung erforderlich ist, bis entweder die letztendlichen Stapel oder zumindest eine weitere Stapelung von Vorstapelung erstellt sind.

Die erwähnte Stapelstrecke ist bevorzugt in Maschinenrichtung ansteigend geneigt, abfallend geneigt, oder horizontal, bevorzugt gemeinsam mit einem Ausschieber, besonders bevorzugt wahlweise je nach Produkt eingestellt.

Es kann eine Einstellbarkeit des Winkels vorgesehen sein.

Wenn die Stapelstrecke in Maschinenrichtung ansteigend geneigt ist, dann wirkt eine Komponente der Schwerkraft der gestapelten oder jedenfalls über die Vorstapelung hinausgehend gestapelten Produkte gegen die Maschinenrichtung. Ein Ausschieber kann dann die gegen die Ausschieberichtung wirkende Komponente der Schwerkraft dazu nutzen, eine Stapelung zu bewirken. Konkret muss der Ausschieber nur ein neues gekipptes und durch den Fallschacht bereitgestelltes Produkt, bevorzugt vorgestapelt, in Maschinenrichtung weiter fördern und dabei in den bereits erstellten Weiterstapel einschieben. Wegen der durch die Gewichtskraft gegen diese Richtung gerichtete Kraftkomponente des bereits Weitergestapelten muss Weitergestapelte entweder nicht oder nur wenig festgehalten werden. Dies ist unabhängig davon, ob der Ausschieber eher wie eine Vorschubstange geformt ist und direkt an die Produkte greift, beispielsweise in die Produkte greift, oder ob der Ausschieber beispielweise als Förderband ausgestaltet ist.

Bevorzugt erfolgt das Ausschieben in Maschinenrichtung mit der konkaven Seite voran. Der Durchlauf durch die Stapelstation ist dann besonders einfach gestaltbar: Die Produkte werden bevorzugt mit der konkaven Seite nach oben im Formwerkzeug erzeugt. Anschließend kann ein Ausdrücker zum Vereinzeln die Produkte einfach nach unten aus dem Index ausdrücken. Sie liegen dann nach wie vor mit der konkaven Seite nach oben, können also, sofern dies gewünscht ist, einfach aufgrund der Schwerkraft Vorstapel bilden. Beim Kippen können die Produkte bevorzugt mit der konkaven Seite nach vorne gekippt werden. Hierzu müssen sie lediglich in Maschinenrichtung über die Kippkante transportiert werden. Anschließend kann der Ausschieber sie beispielsweise auf der konvexen Seite ergreifen und in Maschinenrichtung weiterschieben.

Bei einer solchen Konstellation kann besonders einfach auch eine Umkehrung der Liegerichtung der becherförmigen Produkte dadurch erzeugt werden, dass diese nach dem Ausdrücken aus dem Index nicht in Maschinenrichtung über eine Kippkante gefördert werden, sondern gegen die Maschinenrichtung über eine Kippkante in idealerweise dort vorgesehene Fallschächte. Sie liegen dann mit der konkaven Seite gegen die Maschinenrichtung, und ein Ausschieber kann beispielsweise in die konkave Seite hineingreifen.

Bevorzugt ist ein Transportmittel der vereinzelten, ausgedrückten Produkte so eingerichtet, dass es wahlweise entweder in eine erste oder in eine zweite Richtung fördern kann, bevorzugt in Maschinenrichtung oder gegen die Maschinenrichtung, wobei zwei Kippkanten mit jeweils zugehörigen Fallschächten vorgesehen sind. Eine dergestalt eingerichtete Stapelstation kann ohne jedwede Umrüstung verschiedene Produkte stapeln, wenn die Kippkanten oder zumindest die Fallschächte auf die verschiedenen Produkte eingerichtet sind. Es ergibt sich dann in einem Fall ein Stapel mit der konvexen Seite voran, im anderen Fall ein Stapel mit der konkaven Seite voran. Lediglich der Ausschieber muss gegebenenfalls in seiner Bewegung anders programmiert werden. Es ist jedoch keine mechanische Umrüstung erforderlich.

Der gleiche Vorteil ergibt sich, wenn mehrere Arten Fallschächte vorgesehen sind, und wenn der Weg der vereinzelten, bevorzugt vorgestapelten, Produkte beeinflusst werden kann, so dass diese entweder zu einem ersten oder zu einem zweiten oder zu einem weiteren Fallschacht oder Fallschachtmodul geleitet werden. Hierzu kann sich beispielsweise ein Fallschachtmodul an eine örtlich feststehende Kippkante bewegen, oder die Kippkante kann bewegt werden, beispielsweise durch ein Verschieben der Transportmittel, welche die ausgedrückten und vereinzelten Produkte aufnimmt und weitertransportiert, beispielsweise ein Transportband.

Der Ausschieber, der auch als Stapelschieber bezeichnet werden kann, schiebt die bevorzugt vorgestapelten Produkte aus dem Bereich der Fallschächte heraus und entweder in den finalen Stapel hinein oder in eine weitergestapelte Gestalt hinein.

Der Stapelschieber ist bevorzugt elektromotorisch angetrieben. Er kann eine Steuerung oder eine Regelung aufweisen. Generell sei im Rahmen der hier vorliegenden Patentanmeldung darauf hingewiesen, dass zur Vereinfachung der Lesbarkeit generell von einer "Steuerung" gesprochen werden soll. Der Begriff der Steuerung soll einerseits die Steuerung beinhalten, andererseits aber auch ausdrücklich die "Regelung" als Unterfall der Steuerung, sofern sich nicht im Einzelfall etwa ergibt, dass dort nur eine Steuerung gemeint sein soll, nicht aber eine Regelung. Bei einer Nennung einer "Steuerung" ohne weitere Spezifizierung sei jedoch davon ausgegangen, dass auch die Regelung mit ausdrücklich offenbart sein soll.

Es wird vorgeschlagen, dass die Stapelstrecke eine Ausschiebebremse aufweist, welche von einem Ausschieber in Richtung zum Stapeln geschobene Produkte an deren Rändern zu bremsen eingerichtet ist.

Eine solche Ausschiebbremse kann beispielsweise in einer geriffelten Seitenstruktur bestehen, oder es können Bürsten vorgesehen sein, oder es kann beispielsweise ein Luftdruck als Gegendruck aufgebaut worden sein, beispielweise mit Druckluftdüsen. Prinzipiell kommen sämtliche Mittel in Betracht, welche in der Stapelstrecke eine gezielte Kraft auf die Ränder der zum Stapeln geschobenen Produkte gegen die Schieberichtung ausüben.

Hinsichtlich des Einlaufs in die Stapelstation wird vorgeschlagen, dass ein Ausdrücker vorgesehen ist, welcher dazu eingerichtet ist, die Produkte aus dem Index unmittelbar auf die Kippkante auszudrücken. Bei einer solchen Ausgestaltung der Anlage beziehungsweise zumindest der Stapelstation entfällt ein weiteres Fördermittel, welches zunächst die ausgedrückten Produkte aufnimmt und dann zur Kippkante transportiert.

Nach einer nicht beanspruchten Ausführungsform der vorliegenden Erfindung löst die Aufgabe eine Stapelstation für eine Thermoformanlage, eingerichtet zum Stapeln einer Vielzahl becherförmiger Produkte aus einem Index zu einem Stapel mit einer Stapelrichtung, wobei eine Kippeinrichtung vorgesehen ist, welche die becherförmigen Produkte aus einer Ausrichtung abweichend von der Stapelrichtung zum Stapeln in die Ausrichtung der Stapelrichtung zu kippen eingerichtet ist, wobei im Index die Produkte in Spalten und Zeilen vorliegen, wobei die Spalten längs zu einer Maschinenrichtung angeordnet sind und die Zeilen quer zu einer Maschinenrichtung angeordnet sind, wobei die Stapelstation eine Vorstapeleinrichtung aufweist, welche aufwärts der Kippeinrichtungen liegt, so dass die Stapelstation dazu eingerichtet ist, mehrere Produkte einer Spalte gleichzeitig als Vorstapel zu kippen, wobei sich die Stapelstation dadurch kennzeichnet, dass sie dazu eingerichtet ist, die gekippten Vorstapel jeder Spalte in Maschinenrichtung unmittelbar in einen jeweils zugehörigen aus der Stapelstation abzutransportierenden Stapel auszuschieben.

Dies spart ebenfalls gegenüber der DE 42 44 089 A1 eine vollständige Maschineneinheit ein: Nämlich den Querförderer, der sich in der Druckschrift anschließend an den Ausschieber anschließt und die einzelnen Vorstapel ohne weiteres Ineinanderstapeln zunächst aufnimmt, dann querfördert und erst anschließend aus der Maschine ausgibt, wobei nicht einmal eine endgültige Stapelung der Vorstapel erfolgt. Vielmehr werden in der Druckschrift die zunächst mittels des Ausdrückers hergestellten Produktstapel als endgültige Stapel ausgegeben.

Die hier vorliegende Erfindung hat demgegenüber erkannt, dass es von Vorteil ist, zunächst im Ausdrücker nur Vorstapel oder einzelne Produkte herzustellen, und die letztliche Stapelung der Produkte in liegender Form vorzunehmen.

Es wird vorgeschlagen, dass zum Ausschieben der gekippten vorgestapelten Produkte in einen Stapel ein Ausschieber vorgesehen ist, der die Produkte in einem Stapelrhythmus in der Stapelrichtung in den Stapel zu schieben eingerichtet ist.

Es sei ausdrücklich betont, dass der Stapelrhythmus nicht unbedingt dem Kipprhythmus entsprechen muss, bevorzugt aber auf dem Kipprhythmus abgestimmt ist. Im Idealfall ist ein Ausschieberhythmus identisch mit dem Kipprhythmus. Dies bedeutet nichts anderes, als dass jedes Mal nach dem Kippen eines Produkts beziehungsweise einer Zeile von Produkten der Ausschieber eine Ausschiebbewegung der gekippten Produkte oder Vorstapel ausführt.

In der bevorzugten Ausführungsform ist jedoch nicht jedes Ausschieben gleichzeitig ein Stapeln, sprich das endgültige Herstellen eines dann abzutransportierenden Stapels, sondern ist der Stapelrhythmus niedriger als der Ausschieberhythmus. Bei einer solchen Abstimmung der verschiedenen Rhythmen aufeinander kann beispielsweise nach jedem Kippen und Fallen von Produkten oder Vorstapeln durch den Fallschacht in den Wirkbereich des Ausschiebers auf der Stapelstrecke ein Vorschub des Ausschiebers erfolgen, wobei das gerade herabgefallene Produkt beziehungsweise der gerade herabgefallene Vorstapel weiter zu einem größeren Vorstapel vorgestapelt wird, nämlich durch Ineinanderschieben der verschiedenen Produkte beziehungsweise Vorstapel in der Stapelstrecke. Nach n Takten ist entweder der Stapel so groß geworden, dass er automatisch von einem Weitertransportmechanismus ergriffen wird, ober der Ausschieber führt einen Stapelhub und somit einen Ausschiebhub durch, oder ein anderes Transportmittel führt einen Ausschub des somit endgültig hergestellten Stapels durch.

Bevorzugt ist der Ausschieber dazu eingerichtet, mehrere Vorstapel gleichzeitig in den Stapel hineinzuschieben.

Die aus einer Spalte zu erzeugenden vorgesehenen Stapel sind bevorzugt gefluchtet mit der zugehörigen Spalte des Index'.

Bei einer solchen Gestaltung ist kein Quertransport erforderlich, sondern die einzelnen Produkte der Spalten des Index' können in Maschinenrichtung unbeeinträchtigt vorwärts laufen. Sie erreichen des Ausdrücker, werden dort vereinzelt, werden entweder einzeln oder vorgestapelt der Kippkante und dem Fallschacht zugeführt, werden dort vom Ausschieber weiter in Maschinenrichtung geschoben und erreichen letztlich ihren Stapel, ohne dass sich eine seitliche Abweichung der Laufrichtung abgespielt hat.

Ein Ausschieber ist bevorzugt wahlweise eine von zwei Schubstufen auszuführen eingerichtet, wobei eine erste Schubstufe einen kürzeren Vorschub aufweist und eine zweite Schubstufe einen längeren Vorschub aufweist, wobei die erste Schubstufe zum Stapeln von Vorstapeln eingerichtet ist, und wobei die zweite Schubstufe zum Ausschieben der Produkte zum Weitertransportieren eingerichtet ist.

Es sei darauf hingewiesen, dass auch mehr als zwei Schubstufen vorgesehen sein können.

Nach einer Ausführungsform der vorliegenden Erfindung löst die gestellte Aufgabe eine Stapelstation für eine Thermoformanlage, eingerichtet zum Stapeln einer Vielzahl becherförmiger Produkte aus einem Index zu einem Stapel mit einer Stapelrichtung, wobei eine Kippeinrichtung vorgesehen ist, welche die becherförmigen Produkte aus einer Ausrichtung abweichend von der Stapelrichtung zum Stapeln in die Ausrichtung der Stapelrichtung zu kippen eingerichtet ist, wobei im Index die Produkte in Spalten und Zeilen vorliegen, wobei die Spalten längs zu einer Maschinenrichtung angeordnet sind und die Zeilen quer zu einer Maschinenrichtung angeordnet sind, wobei die Stapelstation eine Ausdrückeinrichtung aufweist, welche aus dem Index Einzelnutzen ausdrückt und die ausgedrückten Einzelnutzen auf eine Vorstapelfördereinrichtung bringt, welche die Einzelnutzen mit einer Vorstapelfördertaktung zur Kippeinrichtung führt, wobei sich die Stapelstation dadurch kennzeichnet, dass die Vorstapelfördertaktung nach jedem Ausdrücken einen Vorschub in die Kippeinrichtung durchführt.

Begrifflich sei hierzu erläutert, dass die "Vorstapelfördereinrichtung" bereits aus der DE 42 44 089 A1 bekannt ist: Denn auch in der dortigen Druckschrift werden aus einem (nicht dargestellten) Ausdrücker die Produkte aus dem Index in einzelne Stapel hinein ausgedrückt. In dieser Form erreichen die schon erstellten Stapel die eigentliche Stapelstation, also denjenigen Zustand, welcher in der Druckschrift beispielsweise in Figur 1 gezeigt ist. Das dort vorgestellte Förderband 3 ist also nicht dasjenige, mit welchem die ursprünglichen Kunststofffolien oder Kunststoffplatten transportiert wurden. Vielmehr spielen sich der Transport der Kunststofflage und das Erzeugen der becherförmigen Produkte mittels eines Kavitäten aufweisenden Werkzeugs oberhalb und vor der dargestellten Situation in der Offenlegungsschrift ab. Das dargestellte Transportband 3 ist also eine "Vorstapelfördereinrichtung", wenn anschließend die dort offenbarten Stapel noch zu größeren Stapeleinheiten gestapelt werden.

In der DE 42 44 089 A1 ist die Vorstapelfördertaktung zur Kippeinrichtung so eingestellt, dass zunächst sämtliche Stapel vollständig vom Ausdrücker geführt werden. Dann muss der Produktionsprozess im Formwerkzeug angehalten werden, und die einzelnen Zeilen werden nacheinander in die Kippeinrichtung vorgeschoben, konkret in den Kippstapler 6. Dort erfolgt zeilenweise das Kippen und anschließend ein Vorschub auf den Querförderer 4.

Die hier vorgestellte Ausführungsform der Erfindung hingegen führt nach jedem Ausdrücken mehrerer Zeilen gleichzeitig einen Vorschub der Vorstapelfördereinrichtung zur Kippkante in die Kippeinrichtung durch. Zu jedem Zeitpunkt finden sich daher in den verschiedenen Zeilen in der Vorstapelfördereinrichtung unterschiedliche Anzahlen von Produkten in den Vorstapeln wieder. Dennoch wird bei jedem Vorschub in die Kippeinrichtung hinein ein Vorstapel mit einer identischen Anzahl Produkte gekippt.

Bevorzugt bezweckt der Vorschub eine geringere Produktzahl als eine Zeilenzahl des Index' beträgt. Dies ist der konstruktive Weg dafür, dass sich Vorstapel aufbauen, auch wenn bei jedem Ausdrücktakt ein Vorschub der Vorstapelfördereinrichtung abspielt.

Die Stapelstation nach Anspruch 1 ist zum Stapeln einer Vielzahl becherförmiger Produkte aus einem Index zu einem Stapel eingerichtet, wobei eine Kippeinrichtung vorgesehen ist, welche die becherförmigen Produkte aus einer Ausrichtung abweichend von der Stapelrichtung zum Stapeln in die Ausrichtung der Stapelrichtung zu kippen eingerichtet ist, wobei im Index die Produkte in Spalten und Zeilen vorliegen, wobei die Spalten längs zu einer Maschinenrichtung angeordnet sind und die Zeilen quer zur Maschinenrichtung angeordnet sind, wobei die Stapelstation eine Ausdrückeinrichtung aufweist, welche aus dem Index Einzelnutzen ausdrückt, und wobei die Ausdrückeinrichtung bevorzugt die ausgedrückten Einzelnutzen auf eine Vorstapelfördereinrichtung bringt, welche die Einzelnutzen mit einer Vorstapelfördertaktung zur Kippeinrichtung führt, von wo aus die Einzelnutzen als Vorstapel in einen Stapel geschoben werden, wobei die bevorzugt angegebene Merkmalskombination dann greift, wenn aus dem Index direkt auf die Kippkante ausgedrückt wird, wobei sich die Stapelstation dadurch kennzeichnet, dass sie dazu eingerichtet ist, zusätzlich zum Schieben der Einzelnutzen in den Stapel einen alternativen Transportweg anzusteuern, welcher einen Einzelnutzen einem Ausschuss zuführt.

Gegenüber dem Stand der Technik ist es dadurch möglich, im Rahmen der Qualitätskontrolle oder auch beispielsweise beim Anfahren der Anlage oder beispielsweise beim Anfahren der Heizstation einzelne Nutzen einem Ausschuss zuzuführen, oder beispielsweise jeweils zumindest eine Zeile von Nutzen dem Ausschuss zuzuführen.

Die Steuerung, ob wahlweise der Einzelnutzen in den Stapel geschoben wird oder ob er dem Ausschuss zugeführt wird, kann entweder manuell vorgegeben werden, oder es kann eine Messeinrichtung vorgesehen sein, welche die Qualität des Produkts zu beurteilen eingerichtet ist und beim Unterschreiten oder Überschreiten bestimmter Grenzwerte automatisch die Zuführung zum Ausschuss veranlasst.

Bevorzugt werden alle Produkte einer Zeile dem Ausschuss zugeführt, wenn mindestens eines der Produkte der Zeile dem Ausschuss zugeführt werden soll. Dies ermöglicht es, die Stapeltaktung ansonsten identisch beizubehalten. Außerdem ist mit gewisser Wahrscheinlichkeit davon auszugehen, dass auch die benachbarten Produkte eines die Qualitätskontrolle nicht bestehenden Produkts nicht ideal sein werden.

Um den alternativen Transportweg anzusteuern, ist die Vorstapelfördereinrichtung dazu eingerichtet, wahlweise alternativ zu einem Vorschub zur Kippeinrichtung einen Transportschub in Gegenrichtung auszuführen.

Aufwärts der Vorstapelfördereinrichtung ist ein Ausschusssammler angeordnet, beispielweise ein einfacher Korb oder Eimer für den Ausschuss. Unter der Richtung "aufwärts" ist hier gemeint, dass entgegen der eigentlichen Weiterförderrichtung in Richtung zum Stapel gefördert werden soll, also gewissermaßen stromaufwärts in Bezug auf die Maschinenrichtung, wenn die Maschinenrichtung stetig zum Stapel führt.

In einer alternativen oder kumulativen Ausführungsform kann der Fallschacht einen in den Fallweg stellbaren Umlenker aufweisen. Auch dadurch lassen sich leicht ausschüssige Produkte aus dem Weg zum Stapel entfernen.

Nach einem weiteren Aspekt der Erfindung löst die gestellte Aufgabe ein Verfahren zum Herstellen von becherförmigen Produkten in einer Thermoformanlage nach Anspruch 4.

Es versteht sich, dass eine Thermoformanlage unmittelbar von den Vorteilen der Stapelstation und/oder des Verfahrens profitiert.

Unabhängig von der konkreten Gestaltung der weiteren Anlage wird vorgeschlagen, dass eine Einstelleinrichtung für einen Kipppunkt der Produkte an der Kippkante vorgesehen ist.

Je nach den herzustellenden Produkten, der Kunststofftemperatur beim Erreichen der Kippkante oder weiteren oder anderen Parametern kann es sinnvoll sein, den Kipppunkt zu verstellen. Insbesondere sei zum konstruktiven Gestalten der Einstelleinrichtung gedacht, dass ein zur Kippkante führendes Förderband in seiner Neigung verstellbar ist, dass dieses Förderband zur Kippkante oder zum Fallschacht in seinem Abstand verstellbar ist und/oder dass der Fallschacht in seiner Neigung einstellbar ist.

Die Erfindung wird nachstehend anhand von Ausführungsbeispielen unter Bezugnahme auf die Zeichnung näher erläutert. Dort zeigen
- Figur 1: schematisch in einer seitlichen Ansicht eine Stapelstation einer Thermoformanlage, mit einem Ausdrücker, einer Vielzahl Produkte, einer Folie, einem Vorstapel-Förderband, einem Ausschieber, einer Kippkante, einem Fallschacht, einem Ausschieber und einem Stapelförderband,
- Figur 2: die schematische Ansicht aus Figur 1 nach einem ersten Ausdrücktakt,
- Figur 3: die Ansicht aus den Figuren 1 und 2 während eines zweiten Ausdrücktaktes,
- Figur 4: die Ansicht aus den Figuren 1-3 nach dem zweiten Ausdrücktakt,
- Figur 5: die Ansicht aus den Figuren 1-4 während eines dritten Ausdrücktaktes,
- Figur 6: die Ansicht aus den Figuren 1-5 nach dem dritten Ausdrücktakt,
- Figur 7: schematisch eine räumliche Ansicht auf einen Teil der Stapelstation sowie
- Figur 8: eine beispielhafte Ausgestaltung eines Moduls mit einer Vielzahl Fallschächte.

Die erfindungsgemäße Stapelstation für eine Thermoformanlage wird durch die Merkmale des Anspruchs 1 und das erfindungsgemäße Verfahren zum Herstellen von becherförmigen Produkten in einer Thermoformanlage durch die Merkmale des Anspruchs 4 definiert. Weitere Ausführungsformen der Erfindung ergeben sich aus den abhängigen Ansprüchen.

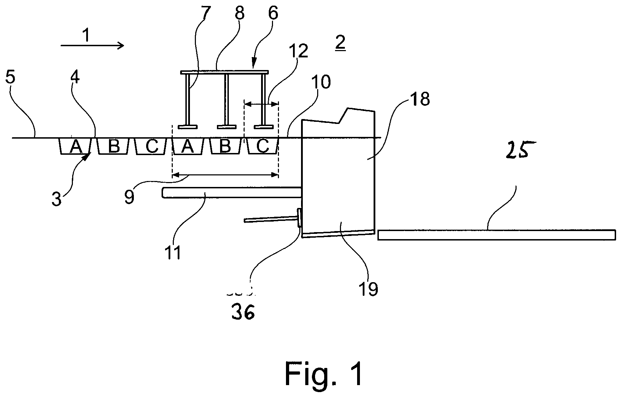

In der schematisch dargestellten Thermoformanlage läuft ein Verfahren wie folgt:
Ein Formwerkzeug (nicht dargestellt) ist in Maschinenrichtung 1 oberhalb der Stapelstation 2 angeordnet, bei einer einfachen linearen Aufbauweise einer Thermoformanlage also links von der in Figur 1 dargestellten Länge.

Das Formwerkzeug ist ein Kavitätenwerkzeug, welches dazu eingerichtet ist, in Maschinenrichtung 1 drei Zeilen von Produkten in einem Index 3 herzustellen, somit ein Produkt C einer ersten Zeile, ein Produkt B einer zweiten Zeile und ein Produkt A einer dritten Zeile. Die Anzahl der Spalten des Index' ist beliebig. Der Einfachheit halber wird nachstehend, da es sich um eine Seitenansicht handelt, immer nur von einem Produkt gesprochen, nicht aber von einer ganzen Zeile oder mehreren Produkten, denn in einer Seitenansicht lässt sich immer nur das im hier vorliegenden Beispiel ganz rechts liegende Produkt einer Zeile des Index' sichtbar darstellen.

Die hergestellten Produkte A, B und C sind miteinander über kleine Kerben 4 (exemplarisch beziffert) verbunden, so dass sie nach der Thermoformstation noch im Verbund mit einer Folie 5 durch die Anlage transportiert werden können.

Durch das Verbundensein auch mehrerer Indizes in Maschinenrichtung laufen die Indizes miteinander verbunden unter einen Ausdrücker 6. Der Ausdrücker 6 hat für jede Zeile im Index, hier also sowohl für das Produkt A, das Produkt B und das Produkt C, jeweils einen Ausdrückarm 7 (exemplarisch beziffert). Die drei Ausdrückarme 7 sind miteinander über eine Ausdrückerbrücke 8 verbunden.

Die Maschine taktet ihren Vorschub über die Länge 9 eines Nutzens, also über die Länge der mit einem Hub und einem Takt im Formwerkzeug erzeugten Produkte eines Index'.

Sobald die Folie 5 mit dem Nutzen 9, somit den drei Zeilen der Produkte A, B und C, im Ausdrücker 6 angekommen ist und dort angehalten hat, fährt der Ausdrücker 6 mit seinen Ausdrückarmen 7 nach unten. Dabei greift jeder der Ausdrückarme 7 in sein ihm zugeordnetes Produkt A, B oder C hinein. Die Kerben 4 zerreißen bei der dadurch in sie induzierten Zugkraft, und die Produkte A, B, C lösen sich aus der Folie 5 als Einzelnutzen heraus. Es verbleibt nur ein Restfoliengitter 10 abwärts des Ausdrückers 6.

Unter der Ebene der Folie 5 und des Restfoliengitters 10 befindet sich auf Höhe des Ausdrückers 6 ein Vorstapelförderband 11.

Der Hub des Ausdrückers 6 ist soweit eingestellt, dass die Produkte A, B, C in derselben Konstellation auf das Vorstapelförderband ausgedrückt werden und dort zum Liegen kommen wie die Produkte zueinander innerhalb des Index' 3 gewesen sind.

Sind die drei Produkte A, B, C auf dem Vorstapelförderband 11 angekommen, fährt dieses in Maschinenrichtung 1 um einen Takt vor.

Während jedoch die Folie 5 mit jedem Takt einen Vorschub in Höhe eines gesamten Nutzens hat, im hier gezeigten Beispiel also über die Länge 9 des Nutzens mit drei Produkten beziehungsweise Kavitäten im Formwerkzeug, taktet das Vorstapelförderband 11 zeitgleich, führt aber nur einen Vorschub in Maschinenrichtung 1 um eine Länge 12 einer Kavität durch, mithin also jeweils nur eines Produkts A, B, C.

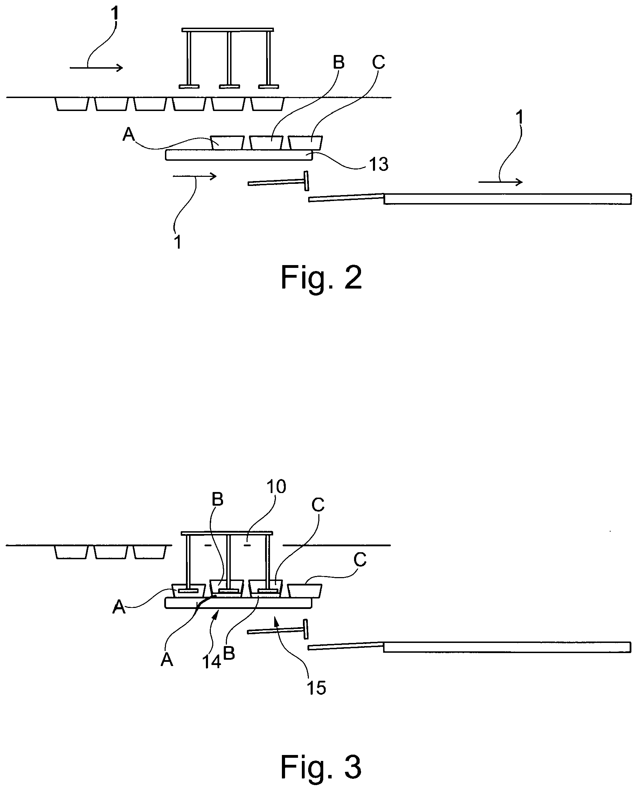

Der Ausdrücker 6 fährt wieder zurück nach oben, die Folie 5 fährt um die Länge 9 eines Nutzens vorwärts, und ein Takt ist beendet (dargestellt in Figur 2).

In diesem Zustand befindet sich das vorderste becherförmige Produkt C noch auf dem um einen Takt einer Länge 12 einer Kavität vorgefahrenen Vorstapelförderband. Das Vorstapelförderband ist so positioniert, dass abwärts, bezogen auf die Maschinenrichtung 1, der ausgedrückten Produkte A, B, C noch etwas mehr Platz ist als die Länge 12 einer Kavität beträgt, so dass das vorderste Produkt C noch auf dem Vorstapelförderband 11 sicher liegen kann, weil sein Schwerpunkt sich noch aufwärts, bezogen auf die Maschinenrichtung 1, einer Kippkante 13 befindet.

Das Vorstapelförderband 11 ist sowohl in Maschinenrichtung 1 als auch in seiner Neigung gegenüber der Horizontalen verstellbar. Dadurch lässt sich exakt einstellen, wie weit ein vorderstes Produkt C nach einem Taktvorschub noch auf dem Vorstapelförderband 11 liegt, oder ob es beispielsweise bereits über die Kippkante 13 heruntergefallen ist.

Im Beginn des zweiten Taktes (dargestellt in Figur 3) verführt der Ausdrücker 6 wiederum einen Ausdrückhub und drückt drei identische Produkte A, B, C aus einem identischen Index aus der Folie 5, konkret aus dem dadurch entstehenden Restfoliengitter 10.

Der Ausdrücker 6 ist so gesteuert, dass er nicht eine zwingende Kraft in vertikaler Richtung nach unten bis zum Vorstapelförderband 11 ausübt. Dies hat seinen Grund darin, dass für die beiden vorderen Produkte B, C des Index' 3 bereits jeweils ein Produkt dort steht, wo der Ausdrücker 6 die beiden vorderen Produkte B, C aus der Folie 5 herausdrücken würde, nämlich die zwei hinteren Produkte A, B. Dies führt dazu, dass das hinterste Produkt A in Folge des Vorschubtaktes des Vorstapelförderbandes 11 direkt auf das Vorstapelförderband 11 ausgedrückt, dass aber das mittlere Produkt B in ein unter ihm befindliches, vorwärts getaktetes ehemals hinteres Produkt A eingerückt wird; ebenso wird das jeweils vordere Produkt C aus der der Folie 5 nach unten in das ehemals mittlere Produkt B nach dessen Verrücken gedrückt. Auf dem Vorstapelförderband ergeben sich somit ein einzelnes Produkt, gebildet aus dem jeweils hintersten Produkt A, sowie zwei erste Vorstapel 14, 15 und in der Anlaufphase der Anlage noch abwärts davon ein einzelnes Produkt, nämlich das zuallererst vorlaufende Produkt C (bis hierhin dargestellt in Figur 3).

Zum Vollenden des Taktes fährt der Ausdrücker 6 wieder nach oben, und das Vorstapelförderband 11 taktet wieder einen Vorschub um die Länge 12 einer Kavität in Maschinenrichtung 1.

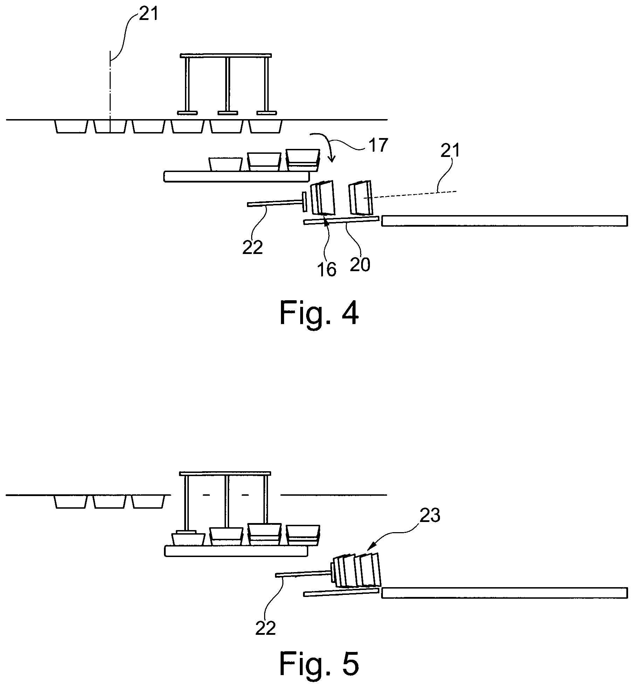

Der jeweils vorderste Vorstapel 16 (dargestellt in Figur 4, wobei allerdings ein längerer Maschinenvorlauf bereits vorausgesetzt wurde in der zeichnerischen Darstellung) wird dabei vom Vorstapelförderband 11 über die Kippkante 13 hinaus in Maschinenrichtung gefördert. In Folge der Gewichtskraft des jeweils vordersten Vorstapels kippt dieser in eine Kipprichtung 17 (angedeutet in Figur 4) in einen Fallschacht 18 hinein. Wände 19 (exemplarisch beziffert) des Fallschachts 18 stabilisieren die Produkte im jeweils vordersten Vorstapel währenddessen Kipp- und Fallbewegung im Fallschacht 18 nach unten, bis der fallende Vorstapel auf einem Stapelboden 20 zum Liegen kommt. Die Produkte A, B, C befinden sich auf dem Stapelboden 20 somit in gekippter Richtung, mithin mit einer Produktachse 21 nun eher flachliegend oder sogar horizontal ausgerichtet.

Ein Ausschieber 22 ist auf dieser dritten Ebene des Produkttransports vorgesehen. Er kann parallel zum Stapelboden 20 vorgeschoben werden, und zwar in Maschinenrichtung. Auf diese Weise kann er einen ersten Vorstapel in einen zweiten Vorstapel hineinschieben, so dass sich entweder schon ein fertiger Stapel oder ein erweiterter Vorstapel 23 ergibt (dargestellt in Figur 5).

Auf dem Stapelboden 20 kann eine beliebige Anzahl von Vorstapeln gesammelt werden, bis sich letztendlich ein aus der Stapelstation abzutransportierender Stapel 24 ergibt. Der fertige Stapel 24 wird dann vom Ausschieber 22 auf ein Abtransportförderband 25 geschoben, so dass die fertigen Stapel 24 in Maschinenrichtung 1 aus der Stapelstation transportiert werden können.

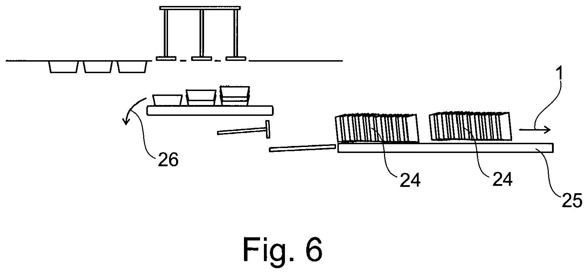

Wird während der Produktion festgestellt, dass ein in einem Index 3 liegendes Produkt Qualitätsanforderungen nicht erfüllt, so wird entweder beispielsweise im Fallschacht 18 eine Umlenkung aktiviert, und die Zeile an Produkten wird ausgeschleust, wobei bevorzugt in diesem Fall das Vorstapelförderband 11 nicht im Takt seinen Vorschub ausführt; oder das Vorstapelförderband 11 wird gegen die Maschinenrichtung 1 aktiviert, so dass in einer Auswurfrichtung 26 (angedeutet in Figur 6) ein Produktausschuss entnommen werden kann.

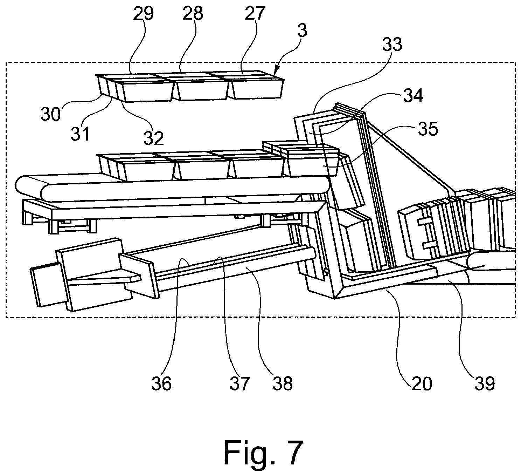

Es wurde bereits erläutert, dass der vorstehend beschriebene Verfahrensablauf (dargestellt in den Figuren 1-6) bevorzugt für alle Produkte einer Zeile 27, 28, 29 eines Index' 3 gleichzeitig erfolgt, so dass sich bei beispielsweise drei Spalten 30, 31, 32 einer Zeile 27, 28, 29 drei Fallschächte 33, 34, 35 anbieten, damit die Produkte jeder Spalte 30, 31, 32 voneinander separiert in jeweils einen Fallschacht 33, 34, 35 hineinfallen (dargestellt in Figur 7), wobei dann bevorzugt auch ein Ausschieber mit drei Ausschiebefingern 36, 37, 38 vorgesehen ist, damit jeder Ausschiebefinger 36, 37, 38 in genau einen Fallschacht 33, 34, 35 hineinfahren kann und die Produkte dort auf dem Stapelboden 20 in Maschinenrichtung weitertransportieren kann.

Bevorzugt lässt sich (wie dargestellt in Figur 7) die Gesamtheit der Fallschächte 33, 34, 35 gemeinsam mit dem Stapelboden 20 und den Ausschiebefingern 36, 37, 38 gegenüber den Horizontalen in einen Winkel 39 neigen. Es muss allerdings keine Neigbarkeit vorhanden sein, und/oder der Winkel 39 kann Null betragen oder er kann negativ sein, also mit einer abfallenden Strecke.

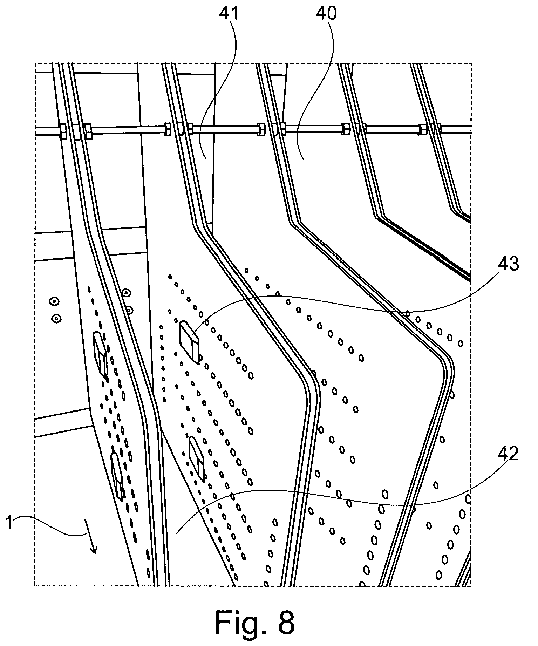

Die einzelnen Fallschächte sind bevorzugt mit blechernen Seitenwänden 40 (exemplarisch beziffert, vgl. Figur 8) versehen.

Abwärts einer Kippkante 41 können die Produkte so zwischen den Seitenwänden 40 hindurch sicher geführt nach unten fallen, auf den Stapelboden 42. Dort sichern gefederte und geriffelte Blättchen 43, welche an den Seitenwänden 40 befestigt sind, bevorzugt in verschiedenen Höhen, die Produkte gegen ein unbeabsichtigtes Kippen nach vorne in Maschinenrichtung 1. Die Blättchen 43 sind bevorzugt mittels rastermäßig angeordneter Haltevorrichtungen wie beispielsweise den hier dargestellten Löchern in ihrer Position in Maschinenrichtung 1 verschieblich fixierbar, so dass sie für verschiedene Längen von Stapeln jeweils gezielt angeordnet werden können.

Die Seitenwände 40 der Fallschächte sind bevorzugt miteinander verbunden, beispielsweise durch eine durchgehende Schraubverbindung, damit sämtliche Fallschächte als ein Modul ausgetauscht werden können.

### Bezugszeichenliste

- 1: Maschinenrichtung
- 2: Stapelstation
- 3: Index
- 4: Kerbe
- 5: Folie
- 6: Ausdrücker
- 7: Ausdrückarm
- 8: Ausdrückerbrücke
- 9: Länge eines Nutzens
- 10: Restfoliengitter
- 11: Vorstapelförderband
- 12: Länge einer Kavität
- 13: Kippkante
- 14, 15: erste Vorstapel
- 16: vorderster Vorstapel
- 17: Kipprichtung
- 18: Fallschacht
- 19: Wände
- 20: Stapelboden
- 21: Produktachse
- 22: Ausschieber
- 23: erweiterter Vorstapel
- 24: Stapel
- 25: Abtransportförderband
- 26: Auswurfrichtung
- 27, 28, 29: Zeilen
- 30, 31, 32: Spalten
- 33, 34, 35: Fallschächte
- 36, 37, 38: Ausschiebefinger
- 39: Winkel
- 40: Seitenwand
- 41: Kippkante
- 42: Stapelboden
- 43: Blättchen

## Patentansprüche

1. Stapelstation (2) für eine Thermoformanlage, eingerichtet zum Stapeln einer Vielzahl becherförmiger Produkte aus einem Index (3) zu einem Stapel (24) mit einer Stapelrichtung, wobei eine Kippeinrichtung (17) vorgesehen ist, welche die becherförmigen Produkte aus einer Ausrichtung abweichend von der Stapelrichtung zum Stapeln in die Ausrichtung der Stapelrichtung zu kippen eingerichtet ist, wobei im Index (3) die Produkte in Spalten (30, 31, 32) und Zeilen (27, 28, 29) vorliegen, wobei die Spalten (30, 31, 32) längs zu einer Maschinenrichtung (1) angeordnet sind und die Zeilen (27, 28, 29) quer zur Maschinenrichtung (1) angeordnet sind, wobei die Stapelstation eine Ausdrückeinrichtung aufweist, welche aus dem Index (3) Einzelnutzen ausdrückt,
wobei die Stapelstation (2) eine Vorstapeleinrichtung aufweist, welche aufwärts der Kippeinrichtung (17) liegt, sodass die Stapelstation (2) dazu eingerichtet ist, mehrere Produkte einer Spalte gleichzeitig als Vorstapel zu kippen,
wobei die Ausdrückeinrichtung die ausgedrückten Einzelnutzen auf eine Vorstapelfördereinrichtung bringt, welche die Einzelnutzen mit einer Vorstapelfördertaktung zur Kippeinrichtung (17) mit einer Kippkante (13) mit einem daran anschließenden Fallschacht (18) für die Produkte führt, von wo aus die Einzelnutzen als Vorstapel in einen Stapel (24) geschoben werden,
wobei zum Ausschieben der gekippten vorgestapelten Produkte in einen Stapel (24) ein Ausschieber (22) vorgesehen ist, der die Produkte in einem Stapelrhythmus in der Stapeleinrichtung in den Stapel (24) zu schieben eingerichtet ist,
***dadurch gekennzeichnet, dass***
die Stapelstation (2) dazu eingerichtet ist, zusätzlich, d.h. als Alternative, zum Schieben der Einzelnutzen in den Stapel (24) einen alternativen Transportweg anzusteuern, welcher einen Einzelnutzen einem Ausschuss zuführt,
wobei die Vorstapelfördereinrichtung dazu eingerichtet ist, wahlweise alternativ zu einem Vorschub zur Kippeinrichtung (17) einen Transportschub in Gegenrichtung auszuführen,
wobei aufwärts der Vorstapelfördereinrichtung ein Ausschusssammler angeordnet ist
und wobei
• zur Steuerung, ob wahlweise ein Einzelnutzen in den Stapel (24) geschoben oder ob er dem Ausschuss zugeführt wird, eine Messeinrichtung vorgesehen ist, welche die Qualität der Produkte zu beurteilen eingerichtet ist und beim Unterschreiten oder Überschreiten vorbestimmter Grenzwerte automatisch die Zuführung zum Ausschuss veranlasst,
• oder diese Steuerung manuell vorgegeben wird.

2. Stapelstation nach einem der vorstehenden Ansprüche, ***dadurch gekennzeichnet, dass*** der Fallschacht einen in den Fallweg stellbaren Umlenker aufweist.

3. Stapelstation nach einem der vorstehenden Ansprüche, ***dadurch gekennzeichnet, dass*** eine Einstelleinrichtung für einen Kipppunkt der Produkte an der Kippkante vorgesehen ist.

4. Verfahren zum Herstellen von becherförmigen Produkten in einer Thermoformanlage, wobei zunächst aus einem Index Produkte mittels einer Ausdrückeinrichtung ausgedrückt werden, vorgestapelt werden, und nach einem Kippen über eine Kippkante in einen Fallschacht hinein zu einem Stapel mittels eines Ausschiebers liegend gestapelt werden, ***dadurch gekennzeichnet, dass*** zum Durchführen des Verfahrens eine Stapelstation nach einem der vorstehenden Ansprüche mit einer Vorstapelfördereinrichtung verwendet wird und die Vorstapelfördereinrichtung wahlweise alternativ zu einem Vorschub in Kipprichtung einen Transportschub in Gegenrichtung ausführt, hin zum Ausschusssammler.

5. Verfahren nach Anspruch 4, ***dadurch gekennzeichnet, dass*** alle Produkte einer Zeile (27, 28, 29) dem Ausschuss zugeführt werden, wenn mindestens eines der Produkte der Zeile (27, 28, 29) dem Ausschuss zugeführt werden soll, während die Stapeltaktung ansonsten identisch beibehalten wird.

6. Verfahren nach Anspruch 5, ***dadurch gekennzeichnet, dass*** die Vorstapelfördertaktung nach jedem Ausdrücken einen Vorschub in die Kipprichtung (17) durchführt.

7. Thermoformanlage mit einer Stapelstation nach einem der Ansprüche 1 bis 3 und/oder eingerichtet zum Durchführen eines Verfahrens nach einem der Ansprüche 4 bis 6.

## Claims

1. A stacking station (2) for a thermoforming system configured for stacking a plurality of cup-shaped products from an index (3) to a stack (24) with stack direction, wherein a tipping device (17) is provided which is configured to tip the cup-shaped products from an alignment deviating from the stacking direction for stacking into the alignment of the stacking device, wherein in the index (3) the products are present in columns (30, 31, 32) and rows (27, 28, 29), wherein the columns (30, 31, 32) are arranged along a machine direction (1) and the rows (27, 28, 29) are arranged perpendicularly to the machine direction (1), wherein the stacking station comprises an ejection device which ejects individual items from the index (3),
wherein the stacking station (2) comprises a pre-stack device, which lies upstream of the tipping device (17) so that the stacking station (2) is configured to tip several products of a column simultaneously as a pre-stack,
wherein the ejection device brings the ejected individual items to a pre-stack conveyor device, which takes the individual items with a pre-stack conveying cycle to the tipping device (17) with a tipping edge (13) with an adjoining fall shaft (18) for the products, from which the individual items are pushed as a pre-stack into a stack (24),
wherein to push the tilted, pre-stacked products into a stack (24) a pusher (22) is provided which is configured to push the products in a stacking cycle in the stacking direction into the stack (24),
**characterised in that**
to push the individual items into the stack (24) the stacking station (2) is additionally, i.e. as an alternative, configured to select an alternative transporting path which supplies an individual item to a rejection unit,
wherein as an alternative to an advancing push to the tipping device (17), the pre-stacking conveyor device is configured to optionally carry out a transporting push in the opposite direction,
wherein upstream of the pre-stacking device a reject collector is arranged,
and wherein
• to control whether an individual item is pushed into the stack (24) or taken to the reject unit, a measuring device is provided which is configured to assess the quality of the products and on falling below or on exceeding predetermined limit values automatically determines the delivery to the rejection unit,
• or this control is manually specified.

2. The stacking station according to one of the preceding claims, **characterised in that** the fall shaft comprises an adjustable diverter in the fall path.

3. The stacking station according to any one of the preceding claims, **characterised in that** an adjusting device for a tipping point of the products on the tipping edge is provided.

4. A method of producing cup-shaped products in a thermoforming system wherein initially products are ejected from an index by means of an ejection device, are pre-stacked, and after tipping over a tipping edge into a fall shaft are stacked lying down into a stack by means of a pusher, **characterised in that** for implementing the method a stacking station according to any one of the preceding claims is used with a pre-stack conveying device and the pre-stack conveying device alternative to an advance in the tipping direction carries out a transporting push in the opposite direction up to the reject collector.

5. The method according to claim 4, **characterised in that** all products of a row (27, 28, 29) are taken to the reject unit if at least one of the products of the row (27, 28, 29) is to be taken to the reject unit, while the stacking cycle is otherwise kept identical.

6. The method according to claim 5, **characterised in that** after every ejection the pre-stack conveying cycle carries out an advance push in the tipping direction (17).

7. A thermoforming system with a stacking station according to any one of claims 1 to 3 and/or configured to implement a method according to any one of claims 4 to 6.

## Revendications

1. Station d'empilage (2) pour une installation de thermoformage, aménagée pour empiler une pluralité de produits en forme de gobelets à partir d'un système d'indexage (3) vers une pile (24) avec une direction d'empilage, un dispositif de basculement (17) étant prévu, lequel est aménagé pour basculer les produits en forme de gobelet d'une orientation s'écartant de la direction d'empilage vers l'empilage dans l'orientation de la direction d'empilage, dans le système d'indexage (3) les produits étant présents en colonnes (30, 31, 32) et en files (27, 28, 29), les colonnes (30, 31, 32) étant disposées longitudinalement à une direction de la machine (1) et les files (27, 28, 29) étant disposées transversalement à la direction de la machine (1), la station d'empilage comportant un dispositif d'éjection, lequel éjecte les unités individuels du système d'indexage (3),
la station d'empilage (2) comportant un dispositif de préempilage, lequel se situe en amont du dispositif de basculement (17) de telle sorte que la station d'empilage (2) est aménagée à cet effet pour faire basculer plusieurs produits d'une colonne simultanément en tant que pile préliminaire,
le dispositif d'éjection amenant les flans individuels éjectés sur un dispositif de transport de préempilage, lequel conduit les flans individuels à une cadence de transport de préempilage vers le dispositif de basculement (17) avec un bord de basculement (13) avec une goulotte de chute (18) se raccordant à celui-ci pour les produits d'où les flans individuels sont poussés dans une pile (24) en tant que pile préliminaire,
un poussoir (22) étant prévu pour pousser les produits basculés préempilés dans une pile (24), qui est aménagé pour pousser dans la pile (24) les produits à un rythme d'empilage dans le dispositif d'empilage,
**caractérisée en ce que**
la station d'empilage (2) est aménagée à cet effet pour piloter en plus, c'est-à-dire en tant qu'alternative, une voie de transport alternative pour pousser dans la pile (24) les flans individuels, laquelle achemine un flan individuel vers un rejet,
le dispositif de transport de préempilage étant aménagé à cet effet pour exécuter sélectivement de façon alternative à une avance vers le dispositif de basculement (17), une avance de transport dans le sens opposé,
un collecteur de rebuts étant disposé en amont du dispositif de transport de préempilage,
et
• un dispositif de mesure étant prévu pour piloter, sélectivement si un flan individuel est poussé dans la pile (24) ou s'il est acheminé vers le rejet, lequel est aménagé pour évaluer la qualité des produits et de déclencher automatiquement l'acheminement vers le rejet en cas de dépassement inférieur ou supérieur des valeurs limites prédéfinies,
• ou cette commande étant manuellement prédéfinie.

2. Station d'empilage selon l'une quelconque des revendications précédentes, **caractérisée en ce que** la goulotte de chute comporte un déviateur réglable dans la trajectoire de chute.

3. Station d'empilage selon l'une quelconque des revendications précédentes, **caractérisée en ce qu'**un dispositif de réglage est prévu sur le bord de basculement pour un point de basculement des produits.

4. Procédé pour la fabrication de produits en forme de gobelets dans une installation de thermoformage, les produits étant d'abord éjectés du système d'indexage au moyen d'un dispositif d'éjection, préempilés, et après un basculement sur un bord de basculement dans une goulotte de chute empilés à plat en une pile au moyen d'un poussoir, **caractérisée en ce que** pour exécuter le procédé, on utilise une station d'empilage selon l'une quelconque des revendications précédentes avec un dispositif de transport de préempilage et le dispositif de transport de préempilage exécute sélectivement de façon alternative à une avance en direction de basculement, une poussée de transport dans le sens opposé au collecteur de rebuts.

5. Procédé selon la revendication 4, **caractérisé en ce que** tous les produits d'une file (27, 28, 29) sont acheminés vers le rejet, si au moins un des produits de la file (27, 28, 29) doit être acheminé vers le rejet, alors que la cadence d'empilage est sinon conservée identique.

6. Procédé selon la revendication 5, **caractérisé en ce que** la cadence de transport de préempilage exécute après chaque éjection une avance dans la direction de basculement (17) .

7. Installation de thermoformage avec une station d'empilage selon l'une quelconque des revendications 1 à 3 et/ou aménagée pour exécuter un procédé selon l'une quelconque des revendications 4 à 6.
